# EUROPEAN PATENT APPLICATION

(11) **EP 4 650 712 A1**
(43) Date of publication of application: **19.11.2025**
(21) Application number: 24176435.6
(22) Date of filing: 16.05.2024
(51) Int. Cl.: G01C 15/06

(54) **A SURVEYING POLE**

(71) Applicant: Trimble Inc., Sunnyvale, CA 94085 (US)
(72) Inventor: RALSTON, Stuart, Sunnyvale, 94085 (US); ROEHRING, Mathias, Sunnyvale, 94085 (US)
(74) Representative: AWA Sweden AB

(57) **Abstract**

The present inventive concept relates to a surveying pole (10) comprising: a pole arrangement (100) extending along a longitudinal axis (106) between a first end (1020) and a second end (1040), the pole arrangement (100) comprising: a first pole section (102) and a second pole section (104) telescopically arranged to provide adjustment of an extension (L, L') of the pole arrangement (100) along the longitudinal axis (106), and a target (108) internally arranged in the pole arrangement (100) at a predetermined distance (R) from the first end (1020); a top unit (110) having a center axis (112), the top unit (110) being arrangeable relative to the pole arrangement (100) for achieving a mounted state in which the top unit (110) is attached to the second end (1040) of the pole arrangement (100) such that the center axis (112) of the top unit (110) is parallel to the longitudinal axis (106) of the pole arrangement (100), and an unmounted state in which the top unit (110) is detached from the pole arrangement (100), the top unit (110) comprising: an electronic distance measurement unit (300) configured to emit a light beam (302) in a direction parallel to the center axis (112) of the top unit (110) for determining a distance to a measurement point, wherein the measurement point coincides with the target (108) of the pole arrangement (100) in the mounted state, and circuitry (310) configured to execute: in the mounted state, a pole length determination function (3112) configured to determine a length of the pole arrangement (100) based on the determined distance to the target (108), and in the unmounted state, a remote point distance determination function (3114) configured to determine a distance to a remote point coinciding with the measurement point.

## Description

### Technical field

The present inventive concept relates to a surveying pole.

### Background of the invention

Landscape surveying is a process of measuring and mapping the features and boundaries of a land area. It can be used for various purposes, such as planning, construction, engineering, environmental management, and legal documentation, to name a few. Landscape surveying typically involves using geodetic instruments (such as total stations) GPS receivers, laser scanners, and drones, to collect data and create digital models of the terrain.

One of the challenges of landscape surveying is to ensure accuracy and reliability of collected data. To achieve this, surveyors often use surveying poles, which are objects or markers that can be positioned in the terrain and detected/measured by the geodetic instrument. The geodetic instrument can then determine distances and angles between the surveying poles placed in the terrain and the position of the geodetic instrument. Typically, a tip of the surveying pole defines a point in the terrain, and it is a distance and/or an angle to that point which the geodetic instrument aims to determ ine.

However, the geodetic instrument typically determines distances/angles to a targeting area of the surveying pole, and that targeting area is usually placed on an opposite part of the surveying pole as compared to its tip. This means that, to properly determine the position of the point in the terrain, the surveying pole is usually positioned vertically such that the targeting area is above the tip, and the length of the surveying pole (i.e., the distance between the targeting area and the tip) is also taken into account when determining the position of the point in the terrain. This, since it is usually a top unit of the surveying pole which is detected by the geodetic instrument, whereas it is the position of the point in the terrain which is of interest. The point in the terrain is typically offset in height from the top unit. To improve accuracy, the length of the surveying pole is typically constant during use. For instance, the surveying pole can be manufactured such that its length is constant. However, there is also a need for convenience during storing and/or transportation, whereby the constant length of the surveying pole can be an issue. To solve this, the surveying pole can be made in multiple pieces, which are mounted in a way such that the resulting length of the surveying pole during use is always the same.

An additional problem may arise in case the point in the terrain is inaccessible for the tip of the surveying pole. For instance, the length of the surveying pole may be inadequate and/or it is physically impossible to position the surveying pole such that its tip is positioned at that point. In other words, it is problematic in case the point in the terrain is not reachable by the tip of the surveying pole.

### Summary of the invention

In view of the above, it is an object of the present inventive concept to provide a surveying pole which is operable in a mounted state and an unmounted state.

A further object is to, at least partly, mitigate, alleviate or eliminate one or more of the above-identified deficiencies in the art and disadvantages singly or in any combination and solve at least the above-mentioned problem.

According to a first aspect, a surveying pole is provided. The surveying pole comprises a pole arrangement extending along a longitudinal axis between a first end and a second end. The pole arrangement comprises a first pole section and a second pole section telescopically arranged to provide adjustment of an extension of the pole arrangement along the longitudinal axis, and a target internally arranged in the pole arrangement at a predetermined distance from the first end. The surveying pole further comprises a top unit having a center axis. The top unit is arrangeable relative to the pole arrangement for achieving a mounted state in which the top unit is attached to the second end of the pole arrangement such that the center axis of the top unit is parallel to the longitudinal axis of the pole arrangement, and an unmounted state in which the top unit is detached from the pole arrangement. The top unit comprises an electronic distance measurement unit configured to emit a light beam in a direction parallel to the center axis of the top unit for determining a distance to a measurement point, wherein the measurement point coincides with the target of the pole arrangement in the mounted state. The top unit further comprises circuitry configured to execute, in the mounted state, a pole length determination function configured to determine a length of the pole arrangement based on the determined distance to the target, and in the unmounted state, a remote point distance determination function configured to determine a distance to a remote point coinciding with the measurement point.

By means of the present inventive concept, a surveying pole capable of operating in two modes is provided. Firstly, in the mounted state, the pole length determination function is capable of determining the length of the pole arrangement, whereby a more adjustable pole arrangement is allowed. For instance, different lengths of the pole arrangement are allowed, which, in turn, allows for a more adaptable surveying pole. Secondly, in the unmounted state, the remote point distance determination function is capable of determining the distance to the remote point, thereby allowing measurement points not reachable by the pole arrangement. Put differently, these two modes allow for a more adaptable surveying pole.

The top unit may further comprise an inertial measurement unit configured to determine an attitude of the top unit. The circuitry may be further configured to execute, in the mounted state, a first end positioning function configured to determine a position of the first end of the pole arrangement based on the determined distance to the target, the predetermined distance between the target and the first end, and the determined attitude of the top unit. The circuitry may be further configured to execute, in the unmounted state, a remote point positioning function configured to determine a position of a remote point based on the determined distance to the measurement point and the determined attitude of the top unit.

Within the context of this application, the wording "attitude" should be construed as an orientation. Hence, an attitude of the top unit may be understood as an orientation of the top unit. The orientation may be an orientation in space (i.e., in three-dimensional space).

Accordingly, the surveying pole may determine positions of a wider range of measurement points. For instance, in the mounted state, positions of measurement points reachable with the pole arrangement may be determined. Further, in the unmounted state, positions of measurement points not reachable with the pole arrangement may be determined. Put differently, a more adaptable surveying pole may be provided. Further, the top unit may be tilted during use (both in the mounted state and the unmounted state), and this tilt may be determined from the attitude of the top unit. Thus, the determined attitude may be used to compensate for the tilt of the top unit.

The top unit may further comprise a positioning unit configured to determine a position of the top unit. The first end positioning function may be configured to determine the position of the first end further based on the determined position of the top unit. The remote point positioning function may be configured to determine the position of the remote point further based on the determined position of the top unit. Accordingly, absolute positions of the measurement points may thereby be determined by the surveying pole itself, without any interaction with another surveying instrument such as a total station.

The top unit may comprise an opening. The electronic distance measurement unit may be configured to emit and receive a light beam via the opening of the top unit for determining the distance to the measurement point.

The top unit may be releasably attachable to the second end of the pole arrangement via the opening of the top unit. Accordingly, a single electronic distance measurement unit may be used when determining distances in the mounted state and in the unmounted state. Thus, a less complex surveying pole may be allowed since the surveying pole then may not need a separate electronic distance measurement unit for height measurement (i.e., determining the length of the pole arrangement in the mounted state), for example placed in the pole arrangement, and another separate electronic distance measurement unit in the top unit (for determining the distance to the remote point in the unmounted state). Further, associated economical costs may be reduced.

The opening may be a threaded opening. Accordingly, a simple connection between the top unit and the pole arrangement may be allowed.

The top unit may comprise a housing in which the electronic distance measurement unit may be arranged (lodged). Accordingly, a more weather resistant surveying pole may thereby be allowed.

The top unit may be a handheld unit. Accordingly, easier handling of the top unit in the unmounted state of the surveying pole may be allowed.

The electronic distance measurement unit may be configured to emit a light beam having a wavelength in a visible spectrum. Accordingly, easier usage of the surveying pole in its unmounted state may be allowed. For instance, since the light beam may have a wavelength in the visible spectrum, it may be easier for a user of the surveying pole to orient the top unit such that the emitted light beam coincides with the measurement point.

The top unit may further comprise a reflector having a light-reflecting surface. The light-reflecting surface may have a normal substantially perpendicular to a central axis of the reflector. Accordingly, the surveying pole may be configured to reflect incident light beams. For instance, the reflector may be configured to retroreflect incident light beams, such as those emitted from a total station or other geodetic instrument. To that end, the reflector may comprise a plurality of retroreflectors arranged around the central axis of the reflector. With such a reflector, detection of the surveying pole by a geodetic instrument (e.g., a total station) configured to emit light may be improved.

The reflector may be configured to cover an angular area of substantially 360 degrees around the surveying pole. Accordingly, the reflector may be configured to reflect light beams incident on the reflector from all directions along a plane having a normal substantially parallel to the central axis of the reflector and intersecting the reflector. Such plane may typically be a horizontal plane. Thereby, detection of the surveying pole by a geodetic instrument (e.g., a total station) configured to emit light may be improved.

The top unit may further comprise a plurality of light-emitting elements configured to emit light in a direction from a central axis of the top unit. Accordingly, the surveying pole may be detectable by a geodetic instrument (e.g., a total station) configured to detect light emitted by one or more light-emitting elements of the light-emitting elements. Put differently, an enhanced detection of the surveying pole by a geodetic instrument (e.g., a total station) may thereby be allowed.

A light-emitting element of the plurality of light-emitting elements may be configured to emit a light beam having a wavelength in a visible spectrum. Accordingly, the surveying pole may be easier to locate by a user of a geodetic instrument (e.g., a total station) used to determine distances/angles to the surveying pole. For instance, the user of the geodetic instrument may be able to find the surveying pole by eye, whereby a faster and/or easier aiming of the geodetic instrument towards the surveying pole may be allowed.

Further features of, and advantages with, the present inventive concept will become apparent when studying the appended claims and the following description. The skilled person will realize that different features of the present inventive concept may be combined to create variants other than those described in the following, without departing from the scope of the present inventive concept.

### Brief description of the drawings

The aspects of the present inventive concept, including its particular features and advantages, will be readily understood from the following detailed description and the accompanying drawings, in which:
Figure 1 is a schematic illustration of a surveying pole having its pole arrangement in a collapsed state. The pole arrangement in Fig. 1 is a schematic cross-sectional illustration.
Figure 2 is a schematic illustration of the surveying pole having its pole arrangement in an extended state. The pole arrangement in Fig. 2 is a schematic cross-sectional illustration.
Figure 3 is a schematic illustration of the top unit in an unmounted state (i.e., detached from the pole arrangement). In Fig. 3, internal components of a top unit of the surveying pole are shown for illustrative purposes.
Figure 4 is a schematic illustration of circuitry of the top unit.
Figure 5 is a schematic illustration of an example use case of the surveying pole in the mounted state.
Figure 6 is a schematic illustration of an example use case of the surveying pole in the unmounted state.

### Detailed description

The present inventive concept will now be described more fully hereinafter with reference to the accompanying drawings, in which currently preferred variants of the inventive concept are shown and discussed. This inventive concept may, however, be implemented in many different forms and should not be construed as limited to the variants set forth herein; rather, these variants are provided for thoroughness and completeness, and fully convey the scope of the present inventive concept to the skilled person. As illustrated in the figures, features may be exaggerated for illustrative purposes and, thus, may be provided to illustrate the general structures of variants of the present inventive concept. Like reference numerals refer to like elements throughout the description.

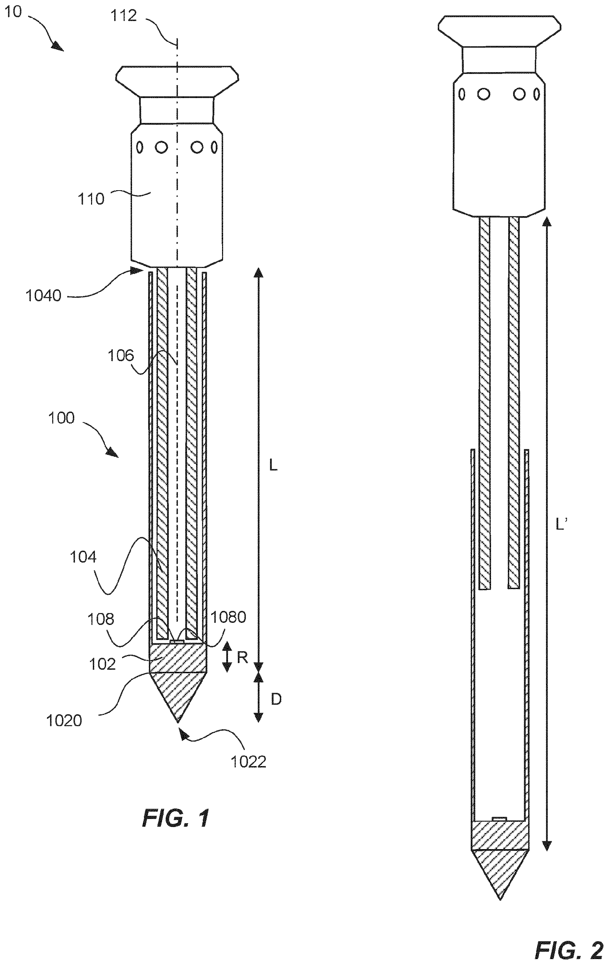

Figure 1 is a schematic illustration of a surveying pole 10. The surveying pole 10 comprises a pole arrangement 100, and a top unit 110.

The pole arrangement 100 extends along a longitudinal axis 106 between a first end 1020 and a second end 1040. The pole arrangement comprises a first pole section 102 and a second pole section 104. As is illustrated in the example of Fig. 1, the first end 1020 may be an end of the first pole section 102. In some variants, the first end 1020 of the pole arrangement 100 may coincide with a tip 1022 of the pole arrangement 100. Alternatively, and more commonly, the tip 1022 of the pole arrangement 100 may be at a known predetermined distance D and direction from the first end 1020 of the pole arrangement 100. The second end 104 may be an end of the second pole section 1040. As is illustrated in Fig. 1, the first pole section 102 and the second pole section 104 are telescopically arranged to provide adjustment of an extension L of the pole arrangement 100 along the longitudinal axis 106. The extension L of the pole arrangement 100 may be a distance between the first end 1020 and the second end 1040. Put differently, the extension L between the first end 1020 and the second end 1040 of the pole arrangement 100 may be adjustable. Alternatively, the extension of the pole arrangement 100 may be a distance between the tip 1022 of the pole arrangement 100 and the second end 1040. In that case, the extension of the pole arrangement 100 may be determined based on the distance L between the first end 1020 and the second end 1040, and the known predetermined distance D between the first end 1020 and the tip 1022 of the pole arrangement 100. The pole arrangement 100 may be hollow. The pole arrangement 100 may define a cavity. The pole arrangement 100 further comprises a target 108. The target 108 may have a surface 1080. The surface 1080 may be a light-reflecting surface. The surface 1080 may be a light-scattering surface 1080. It is to be understood that the surface 1080 of the target 108 may at least partially reflect light incident on the surface 1080 and/or at least partially scatter light incident on the surface 1080. As is illustrated in Fig. 1, the target 108 is internally arranged in the pole arrangement 100 at a predetermined distance R from the first end 1020. The surface 1080 of the target 108 may be a surface of the target 108 facing the second end 1040 of the pole arrangement 100. The target 108 may be arranged in the cavity that may be defined by the pole arrangement 100.

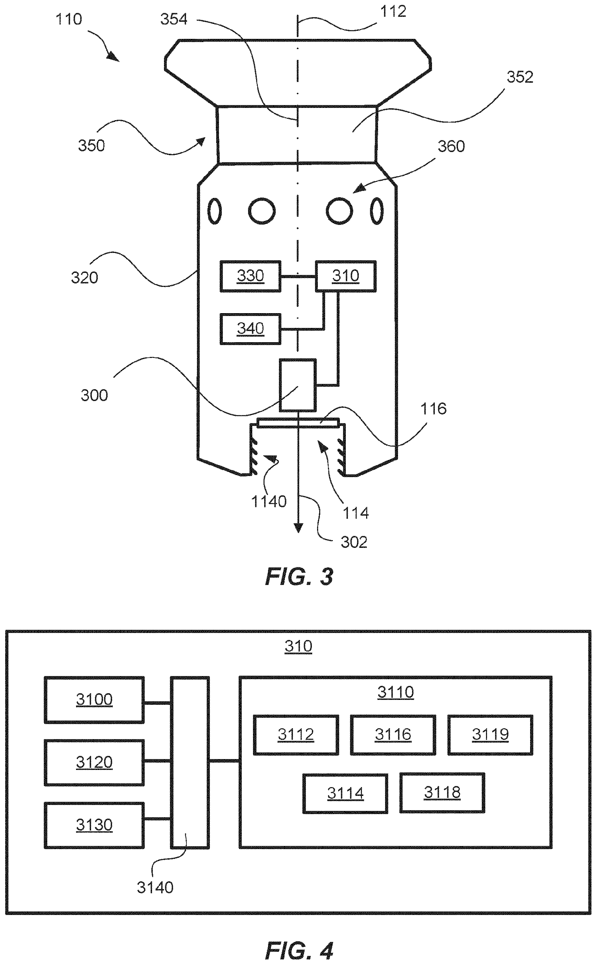

The top unit 110 has a center axis 112. The top unit 110 is arrangeable relative to the pole arrangement 100 for achieving a mounted state and an unmounted state. The mounted state is illustrated in the example of Fig. 1. The top unit 110 may be detachably mounted/arranged at the second end 1040 of the pole arrangement 100 for providing the mounted state. In the mounted state, the top unit 110 is attached to the second end 1040 of the pole arrangement 100 such that the center axis 112 of the top unit 110 is parallel to the longitudinal axis 106 of the pole arrangement 100. In the unmounted state, the top unit 110 is detached from the pole arrangement 100. The unmounted state is illustrated in the example of Fig. 3. In the unmounted state, the top unit 110 and the pole arrangement 100 may be separate pieces. Hence, the surveying pole 10 is capable of operating in two different modes, i.e., the mounted state and the unmounted state.

As is illustrated in Fig. 3, the top unit 110 comprises an electronic distance measurement unit 300 and circuitry 310. The top unit 110 may further comprise one or more of a housing 320, an inertial measurement unit 330, a positioning unit 340, a reflector 350, and a plurality of light-emitting elements 360. One or more of the electronic distance measurement unit 300, the circuitry 310, the inertial measurement unit 330, the positioning unit 340, the reflector 350, and the plurality of light-emitting elements 360 may be arranged in the housing 320. The reflector 350 and/or the plurality of light-emitting elements 360 may be arranged such that they may communicate optically with an outside of the housing 320. For instance, the reflector 350 and/or the plurality of light-emitting elements 360 may optically communicate with the outside of the housing 320 through one or more transparent portions of the housing 320. The one or more transparent portions may comprise an optically transparent material. Alternatively, the housing 320 may comprise one or more apertures through which the reflector 350 and/or the plurality of light-emitting elements 360 may optically communicate with the outside of the housing 320. Further, the reflector 350 and/or the plurality of light-emitting elements 360 may, as is illustrated in the example of Fig. 3, be arranged on an outside surface of the housing 320. The top unit 110 may be a handheld unit. The housing 320 of the top unit 110 may be formed such that it may be handled and/or held by hand. Thus, easier handling of the top unit 110 in the unmounted state may be allowed. Further, easier handling may be allowed in the mounted state as well. For instance, the pole arrangement 100 may be collapsed (i.e., reducing the extension L of the pole arrangement 100 to a minimum), whereby the surveying pole 100 may be easier to handle in case the top unit 110 is a handheld unit. An example of the pole arrangement 100 being collapsed is illustrated in Fig. 1. An example of the pole arrangement 100 being in an extended state is illustrated in Fig. 2. As is seen in these figures, the extension L of the pole arrangement 100 in Fig. 1 is shorter than the extension L' of the pole arrangement 100 in Fig. 2. Even though it is not illustrated in the examples of Fig. 1 and Fig. 2, it is to be understood that the pole arrangement 100 may comprise securing means for securing the extension of the pole arrangement 100. For instance, the pole arrangement 100 may comprise screws, clamps, etc. configured to secure the extension of the pole arrangement 100. By "securing the extension", here is meant that the extension of the pole arrangement 100 may not be changed without removing and/or loosening the securing means.

Turning back to Fig. 3, the electronic distance measurement unit 300 is configured to emit a light beam 302 in a direction parallel to the center axis 112 of the top unit 110 for determining a distance to a measurement point. It is to be understood that the electronic distance measurement unit 300 may be arranged such that the light beam 302 exiting the electronic distance measurement unit 300 is not parallel to the center axis 112 of the top unit 110, and additional optical components (e.g., mirrors, lenses, prisms, wedges, etc.) may be used to direct the light beam 302 such that it is parallel to the center axis 112 of the top unit 110 after being affected by the additional components. The electronic distance measurement unit 300 may be configured to determine the distance based on a time of flight of the emitted light beam 302. In the mounted state, the direction in which the electronic distance measurement unit 300 may be configured to emit and receive a light beam 302 may coincide (or at least be parallel) with the longitudinal axis 106 of the pole arrangement 100. The measurement point coincides with the target 108 of the pole arrangement 100 in the mounted state. The measurement point may coincide with the surface 1080 of the target 108 of the pole arrangement 100 in the mounted state. Put differently, in the mounted state, the electric distance measurement unit 300 may be configured to determine the distance to the surface 1080 of the target 108 of the pole arrangement 100.

In the unmounted state, the top unit 110 may be oriented such that the measurement point coincides with a remote point. For instance, the top unit 110 may, in the unmounted state, be oriented by a user such that the measurement point coincides with the remote point (e.g., a point of interest in the terrain). The electronic distance measurement unit 300 may be internally arranged in the top unit 110. In the mounted state, a distance and direction between the electronic distance measurement unit 300 and the second end 1040 of the pole arrangement 100 may be predetermined. Hence, this distance and direction may be accounted for during distance measurements to the target 108 using the electronic distance measurement unit 300. A skilled person is aware of how this distance and/or direction may be accounted for during distance measurements and this aspect will therefore not be discussed in detail below. The electronic distance measurement unit 300 may be configured to emit a light beam 302 having a wavelength in a visible spectrum. Light having a wavelength in the visible spectrum may be visible to a human eye. The visible spectrum may range from 380 nm to 750 nm. Accordingly, easier usage of the surveying pole 10 in its unmounted state may be allowed. For instance, since the light beam 302 may have a wavelength in the visible spectrum, it may be easier for a user to orient the top unit 110 such that the remote point (e.g., a point of interest in the terrain) coincides with the measurement point. As is further illustrated in the example of Fig. 3, the top unit 110 may comprise an opening 114. The electronic distance measurement unit 300 may be configured to emit and receive a light beam 302 via the opening 114 of the top unit 110 for determining the distance to the measurement point. The opening 114 of the top unit may be covered by a transparent member 116. The transparent member 116 may be transparent to the light beam 302 emitted by the electronic distance measurement unit 300. The transparent member 116 may comprise any suitable transparent material. For instance, the transparent member 116 may comprise glass transparent to light having a wavelength similar to that of the light beam 302 which the electronic distance measurement unit 300 is configured to emit. Covering the opening 114 with the transparent member 116 may improve weather resistance of the top unit 110, this since an inside of the top unit 110 may be protected from an outside of the top unit 110 in the unmounted state. In the unmounted state, the light beam 302 emitted via the opening 114 of the top unit 110 may be allowed to exit the top unit 110 via the opening 114 to reach the remote point coinciding with the measurement point. In the mounted state, the pole arrangement 100 and the top unit 110 may be arranged such that the light beam 302 emitted via the opening 114 of the top unit 110 may reach the target 108 of the pole arrangement 100. To that end, the top unit 110 may be releasably attachable to the second end 1040 of the pole arrangement 100 via the opening 114 of the top unit 110. As in the example of Fig. 3, the opening 114 may be a threaded opening. Put differently, the opening 114 may comprise threads 1140. The second end 1040 of the pole arrangement 100 may be provided with threads. The threads of the second end 1040 of the pole arrangement 100 may be adapted to engage the threads 1140 of the threaded opening 114. It is to be understood that the top unit 110 may be releasably attachable to the second end 1040 of the pole arrangement 100 using other means. For instance, this may be realized using a system comprising snap mechanisms and/or magnets.

The inertial measurement unit 330 may be configured to determine an attitude of the top unit 110. The attitude of the top unit 110 may be an orientation of the top unit 110. Thus, the inertial measurement unit 330 may be configured to determine an orientation of the top unit 110. The orientation may be an orientation in space (e.g., in three-dimensional space).

The positioning unit 340 may be configured to determine a position of the top unit 110. The positioning unit 340 may be configured to determine a position of the top unit 110 relative to a coordinate system. The coordinate system may be a coordinate system external to the positioning unit 340. For instance, the determined position of the top unit 110 may be a global position of the top unit 110. The positioning unit 340 may be configured to determine the position using a global navigation satellite system (GNSS). For instance, the positioning unit 340 may be configured to determine its position using one or more of Galileo, Global Positioning System (GPS), GLONASS, and BeiDou. The positioning unit 340 may comprise sensors (e.g., one or more of a GNSS receiver, a video camera, a LIDAR, etc.) configured to, independently and/or collectively, determine the position of the top unit 110 relative to the coordinate system (e.g., the external coordinate system and/or the global coordinate system). By comprising such a positioning unit 340, the surveying pole 10 may be used as a standalone unit in that an absolute position of the measurement point can be obtained.

The position of the top unit 110 may alternatively, or in addition, be determined using a geodetic instrument (e.g., a total station). To that end, the top unit 110 may further comprise the reflector 350 and/or the plurality of light-emitting elements 360. The reflector 350 may have a light-reflecting surface 352. The light-reflecting surface 352 may be facing outwards from the center axis 112 of the top unit 110. The light-reflecting surface 352 may be adapted to reflect light emitted by the geodetic instrument (e.g., a total station) configured to determine distances/angles to the surveying pole 10. The light-reflecting surface 352 may have a normal substantially perpendicular to a central axis 354 of the reflector 350. The central axis 354 of the reflector 350 may be parallel to the central axis 112 of the top unit 110. For instance, as in the example of Fig. 3, the central axis 354 of the reflector 350 coincides with the central axis 112 of the top unit 110. In the mounted state, the central axis 354 of the reflector 350 may be parallel to, or even coincide with, the longitudinal axis 106 of the pole arrangement 100. The central axis 354 of the reflector 350 may be parallel to, or even coincide with, a direction in which the electronic distance measurement unit 300 is configured to emit the light beam 302. The reflector 350 may be configured to reflect incident light beams. For instance, the reflector 350 may be configured to retroreflect incident light beams. To that end, the reflector 350 may comprise a plurality of retroreflectors arranged around the central axis 354 of the reflector 350. By comprising the reflector 350, detection of the surveying pole by a geodetic instrument (e.g., a total station) configured to emit light may be improved. The reflector 350 may be configured to cover an angular area of substantially 360 degrees around the surveying pole 10. The reflector 350 may be configured to reflect light beams incident on the reflector 350 from all directions along a plane having a normal substantially parallel to the central axis 354 of the reflector 350 and intersecting the reflector 350. Such plane may typically be a horizontal plane.

The plurality of light-emitting elements 360 may be configured to emit light in a direction from the central axis 112 of the top unit 110. The plurality of light-emitting elements 360 may be configured to emit light in a direction parallel to a normal of the light-reflecting surface 352 of the reflector 350. The plurality of light-emitting elements 360 may be arranged about an axis. The axis about which the plurality is arranged may be the central axis 112 of the top unit 110. The axis about which the plurality of light-emitting elements 360 may be arranged may be parallel to the central axis 354 of the reflector 350. The surveying pole 10 may be detectable by a geodetic instrument (e.g., a total station) configured to detect light emitted by one or more light-emitting elements of the plurality of light-emitting elements 360. Put differently, an enhanced detection of the surveying pole 10 by a geodetic instrument (e.g., a total station) may thereby be allowed. One or more light emitting elements of the plurality of light emitting elements 360 may be light emitting diodes (LEDs). One or more light emitting elements of the plurality of light emitting elements 360 may be lasers. One or more light emitting elements of the plurality of light emitting elements 360 may be vertical-cavity surface-emitting lasers (VCSELs). A light-emitting element of the plurality of light-emitting elements 360 may be configured to emit a light beam having a wavelength in a visible spectrum. Accordingly, the surveying pole 10 may be easier to locate by a user of a geodetic instrument (e.g., a total station) used to determine distances/angles to the surveying pole 10. For instance, the user of the geodetic instrument may be able to find the surveying pole 10 by eye, whereby a faster and/or easier aiming of the geodetic instrument towards the surveying pole 10 may be allowed. The plurality of light-emitting elements 360 may be configured to emit continuous (or substantially continuous) light. The plurality of light-emitting elements 360 may be configured to emit pulsed light and/or continuous light. It is to be understood that the plurality of light-emitting elements 360 may comprise optics configured to affect properties of the emitted light. Examples of such optics may be lenses, filters, apertures, etc. As a particular example, a light-emitting element of the plurality of light-emitting elements 360 may comprise a lens configured to reduce (or increase) a divergence of the emitted light. For instance, the lens may be configured to collimate the emitted light.

The circuitry 310 will be described in more detail with reference to Fig. 4. However, the circuitry 310 may, as illustrated in the example of Fig. 4, comprise a memory 3110. Further, the circuitry 310 is configured to execute, in the mounted state, a pole length determination function 3112, and in the unmounted state, a remote point distance determination function 3114. The circuitry 310 may be further configured to execute, in the mounted state, a first end positioning function 3116, and, in the unmounted state, a remote point positioning function 3118. The circuitry 310 may be further configured to execute a light-emitting element control function 3119. The light-emitting element control function 3119 may be configured to control one or more light-emitting elements of the plurality of light-emitting elements 360. For instance, the light-emitting element control function 3119 may be configured to control whether or not one or more light-emitting elements of the plurality of light-emitting elements 360 emit light.

The pole length determination function 3112 is configured to determine a length of the pole arrangement 100 based on the determined distance to the target 108. Since the target 108 is arranged at the predetermined distance R from the first end 1020, the length of the pole arrangement 100 may be determined further based on the predetermined distance R between the target 108 and the first end 1020. The predetermined distance R may be a distance from the surface 1080 of the target 108 to the first end 1020. Thus, the pole length determination function 3112 is capable of determining the length of the pole arrangement 100, whereby a more adjustable pole arrangement 100 is allowed. For instance, different lengths of the pole arrangement 100 is allowed, which, in turn, allows a surveying pole 10 which may be adaptable to a wider range of use cases.

The remote point distance determination 3114 function is configured to determine a distance to a remote point coinciding with the measurement point. Thus, the remote point distance determination function 3114 is capable of determining the distance to the remote point, thereby allowing determining the distance to measurement points not reachable by the pole arrangement 100. For instance, some points of interest in the terrain may be physically and/or practically impossible to reach with the pole arrangement 100.

The first end positioning function 3116 may be configured to determine a position of the first end 1020 of the pole arrangement 100 based on the determined distance to the target 108, the predetermined distance R between the target 108 and the first end 1020, and the determined attitude of the top unit 110. The determined position of the first end 1020 may be a position of the first end 1020 relative to the top unit 110. The determined position of the first end 1020 may be a position relative to a local coordinate system of the inertial measurement unit 330. Alternatively, or additionally, the first end positioning function 3116 may be configured to determine a position of the tip 1022 of the pole arrangement 100. In such case, the first end positioning function 3116 may be configured to determine the position of the tip 1022 of the pole arrangement 100 based on the determined distance to the target 108, the predetermined distance R between the target 108 and the first end 1020, the known predetermined distance D and direction between the first end 1020 and the tip 1022, and the determined attitude of the top unit 110. The first end positioning function 3116 may be configured to determine the position of the first end 1020 and/or the tip 1022 further based on the determined position of the top unit 110. The determined position of the first end 1020 and/or the tip 1022 may be a position relative to a coordinate system external to the top unit 110. For instance, the determined position of the first end 1020 and/or the tip 1022 may be a global position. The position of the top unit 110 may be determined using the positioning unit 340 as discussed above. However, in case the position of the top unit 110 is determined using a geodetic instrument (e.g., a total station) as discussed above, that determined position may be used by the first end positioning function 3116. In such case, the position of the top unit 110 determined by the geodetic instrument may be communicated (e.g., via one or more transceivers) to the circuitry 310 of the top unit 110.

The remote point positioning function 3118 may be configured to determine a position of the remote point based on the determined distance to the measurement point and the determined attitude of the top unit 110. In the unmounted state, the measurement point coincides with the remote point. The determined position of the remote point may be a position of the remote point relative to the top unit 110. The determined position of the remote point may be a position relative to a local coordinate system of the inertial measurement unit 330. The remote point positioning function may be configured to determine the position of the remote point further based on the determined position of the top unit 110. The determined position of the remote point may be a position relative to a coordinate system external to the top unit 110. To that end, the orientation (i.e., the attitude) of the top unit 110 relative to the external coordinate system may be determined by determining a series of positions of the top unit 110 relative to the external coordinate system. By comparing the series of positions of the top unit 110 with movement of the top unit 110 (e.g., a trajectory of movement of the top unit 110 between the positions of the series of positions), the orientation (i.e., the attitude) of the top unit 110 relative to the external coordinate system may be determined. For instance, the determined position and/or series of positions of the remote point may be a global position.

Figure 4 is a schematic illustration of the circuitry 310. The circuitry may comprise one or more of a processing unit 3100, a memory 3110, a transceiver 3120, a power source 3130, and a data bus 3140. One or more of the processing unit 3100, the memory 3110, and the transceiver 3120 may be configured to communicate via the data bus 3140. The processing unit 3100 may comprise a central processing unit (CPU). The processing unit 3100 may be configured to control one or more components and/or functions of the surveying pole 10. The memory 3110 may be a non-transitory computer-readable storage medium. The memory 3110 may be a random-access memory. The memory 3110 may be a non-volatile memory. The memory 3110 may be configured to store program code portions corresponding to one or more functions 3112, 3114, 3116, 3118, 3119. The program code portions may be executable by the processing unit 3100, which thereby performs the functions. Hence, the circuitry 310 may control components and/or perform functions by the processing unit 3100 being configured to execute program code portions corresponding to the specific function which may be stored on the memory 3110. However, it is to be understood that one or more functions of the circuitry 310 may be hardware implemented and/or implemented in a specific integrated circuit. For example, one or more functions may be implemented using field-programmable gate arrays (FPGAs). Put differently, one or more functions of the circuitry 310 may be implemented in hardware or software, or as a combination of the two. The transceiver 3120 may be configured to communicate with external devices. For example, the transceiver 3120 may be configured to communicate with servers, computers, external peripherals (e.g., external storage), etc. The external devices may be local devices or remote devices (e.g., a cloud server). The transceiver 3120 may be configured to communicate with the external devices via an external network (e.g., a local-area network, the internet, etc.) The transceiver 3120 may be configured for wireless and/or wired communication. Suitable technologies for wireless communication are known to the skilled person. Some non-limiting examples comprise Wi-Fi, Near-Field Communication (NFC), and Li-Fi. Suitable technologies for wired communication are known to the skilled person. Some non-limiting examples comprise USB, Ethernet, and Firewire. The power source 3130 may be a battery. The power source 3130 may be configured to provide electrical power to one or more components of the surveying pole 10. For instance, the power source 3130 may be configured to provide electrical power to one or more of the electronic distance measurement device 300, the inertial measurement unit 330, the positioning unit 340, and the plurality of light emitting elements 360. Further, the power source 3130 may be configured to provide electrical power to one or more of the processing unit 3100, the memory 3110, the transceiver 3120, and the data bus 3140.

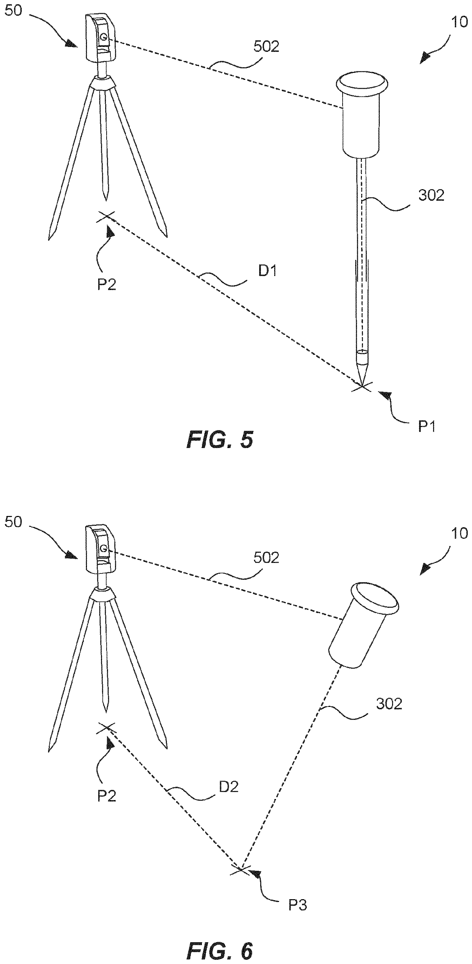

Example use cases for the two different modes (i.e., the mounted state and the unmounted state) will now be described with reference to Fig. 5 and Fig. 6.

Figure 5 illustrates the surveying pole 10 used in the mounted state for determining a position (i.e., a position in three-dimensional space) of a point of interest P1 in a terrain to be surveyed. In this example, the tip of the pole arrangement 100 of the surveying pole 10 is placed at the point of interest P1. By using the electronic distance measurement unit 300 of the surveying pole 10, a height of the top unit 110 above the point of interest P1 can be determined. Further, in case the top unit 110 of the surveying pole 10 comprises an inertial measurement unit, the attitude of the top unit 100 may be determined. As discussed above, this determined attitude may be used to compensate for any tilt of the top unit 110. For instance, a corrected distance between the top unit 110 (or the electronic distance measurement unit 300) and the point of interest P1 may be determined by taking the determined attitude into account. Further, in case the top unit comprises a positioning unit 340, a global position of the point of interest P1 may be determined.

A geodetic instrument 50 (in this case a total station) positioned at a reference point P2 may, as in the example of Fig. 5, be used to determine the position of the point of interest P1. A position of the reference point P2 may be known. For instance, the geodetic instrument 50 may have a positioning unit (e.g., a GNSS device) configured to determine the position of the reference point P2. Typically, the geodetic instrument 50 is aimed (represented by dashed line 502 in Fig. 5) toward the surveying pole 10. Different sensors and units in the geodetic instrument (e.g., an electronic distance measurement unit, a camera, an inertial measurement unit, etc.) may be used to determine a distance D1 and/or direction between the reference point P2 and the point of interest P1.

Figure 6 illustrates the surveying pole 10 used in the unmounted state for determining a position of a further point of interest P3. In this mode, the light beam 302 emitted by the electronic distance measurement unit 300 of the top unit 110 is allowed to exit the top unit 110. A user of the top unit 110 may then orient the top unit 110 such that the measurement point coincides with the further point of interest P3 in the terrain. The position of the further point of interest P3 may then, as discussed previously, be determined using the electronic distance measurement unit 300 and, potentially, the inertial measurement unit 330 and/or the positioning unit 340 of the top unit 110. In the example of Fig. 6, the top unit 110 is tilted, so by using the determined attitude of the top unit 110 (i.e., determined using the inertial measurement unit 330) an improved determination of the position of the further point of interest P3 may be allowed.

The person skilled in the art realizes that the present inventive concept by no means is limited to the preferred variants described above. On the contrary, many modifications and variations are possible within the scope of the appended claims. For instance, the functionality of the circuitry 310 have been described as being implemented as locally executed functions (i.e., executed by the circuitry 310 of the top unit 110). It is, however, to be understood that the functionality may, at least partly, be implemented as remotely executed functions (e.g., at a server, at a cloud server, at a geodetic instrument, etc.). Thus, the functionality of the circuitry 310 as described above may, at least partly, be implemented as partly locally executed functions and partly remotely executed functions. For instance, the first end positioning function 3116 may at least partly be implemented at a geodetic instrument used to determine the position of the top unit 110 of the surveying pole 10. Then, the position determined by the geodetic instrument may be used by a function (implemented in the geodetic instrument) configured to determine the position of the first end 1020 of the pole arrangement 100 of the surveying pole 10. In such case, the top unit 110 may be configured to communicate with the geodetic instrument (e.g., using a transceiver). It is further to be understood that, instead of being implemented in the geodetic instrument, the function to determine the position of the first end 1020 of the pole arrangement 100 of the surveying pole 10 may be implemented in a server (e.g., a cloud server).

Additionally, variations to the disclosed variants can be understood and effected by the skilled person in practicing the claimed invention, from a study of the drawings, the disclosure, and the appended claims.

## Claims

1. A surveying pole (10) comprising:
a pole arrangement (100) extending along a longitudinal axis (106) between a first end (1020) and a second end (1040), the pole arrangement (100) comprising:
a first pole section (102) and a second pole section (104) telescopically arranged to provide adjustment of an extension (L, L') of the pole arrangement (100) along the longitudinal axis (106), and
a target (108) internally arranged in the pole arrangement (100) at a predetermined distance (R) from the first end (1020);
a top unit (110) having a center axis (112), the top unit (110) being arrangeable relative to the pole arrangement (100) for achieving a mounted state in which the top unit (110) is attached to the second end (1040) of the pole arrangement (100) such that the center axis (112) of the top unit (110) is parallel to the longitudinal axis (106) of the pole arrangement (100), and an unmounted state in which the top unit (110) is detached from the pole arrangement (100), the top unit (110) comprising:
an electronic distance measurement unit (300) configured to emit a light beam (302) in a direction parallel to the center axis (112) of the top unit (110) for determining a distance to a measurement point, wherein the measurement point coincides with the target (108) of the pole arrangement (100) in the mounted state, and
circuitry (310) configured to execute:
in the mounted state, a pole length determination function (3112) configured to determine a length of the pole arrangement (100) based on the determined distance to the target (108), and
in the unmounted state, a remote point distance determination function (3114) configured to determine a distance to a remote point coinciding with the measurement point.

2. A surveying pole (10) according to claim 1, wherein the top unit (110) further comprises:
an inertial measurement unit (330) configured to determine an attitude of the top unit (110); and
wherein the circuitry (310) is further configured to execute:
in the mounted state, a first end positioning function (3116) configured to determine a position of the first end (1020) of the pole arrangement (100) based on the determined distance to the target (108), the predetermined distance (R) between the target (108) and the first end (1020), and the determined attitude of the top unit (110); and
in the unmounted state, a remote point positioning function (3118) configured to determine a position of a remote point based on the determined distance to the measurement point and the determined attitude of the top unit (110).

3. A surveying pole (10) according to claim 2, wherein the top unit (110) further comprises:
a positioning unit (340) configured to determine a position of the top unit (110);
wherein the first end positioning function (3116) is configured to determine the position of the first end (1020) further based on the determined position of the top unit (110); and/or
wherein the remote point positioning function (3118) is configured to determine the position of the remote point further based on the determined position of the top unit (110).

4. A surveying pole (10) according to any one of claims 1-3, wherein the top unit (110) comprises an opening (114), and wherein the electronic distance measurement unit (300) is configured to emit and receive a light beam via the opening (114) of the top unit (110) for determining the distance to the measurement point.

5. A surveying pole (10) according to claim 4, wherein the top unit (110) is releasably attachable to the second end (1040) of the pole arrangement (100) via the opening (114) of the top unit (110).

6. A surveying pole (10) according to claim 5, wherein the opening (114) is a threaded opening.

7. A surveying pole (10) according to any one of claims 1-6, wherein the top unit (110) comprises a housing (320) in which the electronic distance measurement unit (300) is arranged.

8. A surveying pole (10) according to any one of claims 1-7, wherein the top unit (110) is a handheld unit.

9. A surveying pole (10) according to any one of claims 1-8, wherein the electronic distance measurement unit (300) is configured to emit a light beam (302) having a wavelength in a visible spectrum.

10. A surveying pole (10) according to any one of claims 1-9, wherein the top unit (110) further comprises:
a reflector (350) having a light-reflecting surface (352), wherein the light-reflecting surface (352) has a normal substantially perpendicular to a central axis (354) of the reflector (350).

11. A surveying pole (10) according to claim 10, wherein the reflector (350) is configured to cover an angular area of substantially 360 degrees around the surveying pole (10).

12. A surveying pole (10) according to any one of claims 10 or 11, wherein the reflector (350) comprises a plurality of retroreflectors arranged around the central axis (354) of the reflector (350).

13. A surveying pole (10) according to any one of claims 1-12, wherein the top unit (110) further comprises:
a plurality of light-emitting elements (360) configured to emit light in a direction from the central axis (112) of the top unit (110).

14. A surveying pole (10) according to claims 13, wherein a light-emitting element of the plurality of light-emitting elements (360) is configured to emit a light beam having a wavelength in a visible spectrum.
